(19) Europäisches Patentamt

European Patent Office

Office européen des brevets

(11) **EP 1 536 657 A1**

(12) **EUROPEAN PATENT APPLICATION**
published in accordance with Art. 158(3) EPC

(43) Date of publication:
**01.06.2005 Bulletin 2005/22**

(51) Int Cl.7: **H04Q 7/36**

(21) Application number: **02807835.0**

(22) Date of filing: **06.09.2002**

(86) International application number:
**PCT/JP2002/009125**

(87) International publication number:
**WO 2004/028185 (01.04.2004 Gazette 2004/14)**

(84) Designated Contracting States:
**AT BE BG CH CY CZ DE DK EE ES FI FR GB GR IE IT LI LU MC NL PT SE SK TR**

(71) Applicant: **MITSUBISHI DENKI KABUSHIKI KAISHA**
**Tokyo 100-8310 (JP)**

(72) Inventors:
• **Muramoto, Eiji**
**Chiyoda-ku, Tokyo 100-8310 (JP)**

• **Satou, Kougi**
**Chiyoda-ku, Tokyo 100-8310 (JP)**
• **Kawabata, Takashi**
**Chiyoda-ku, Tokyo 100-8310 (JP)**
• **Toyota, Norihiko**
**Chiyoda-ku, Tokyo 100-8310 (JP)**

(74) Representative:
**Bohnenberger, Johannes, Dr. et al**
**Meissner, Bolte & Partner**
**Postfach 86 06 24**
**81633 München (DE)**

(54) **RADIO COMMUNICATION SYSTEM TIME SLOT ALLOCATION METHOD**

(57) A ratio of the number of time slots used for communications via a radio channel to the sum of the total number of time slots requested for transmission by a base station and the sum total of the numbers of time slots respectively requested for transmission by subscriber stations is calculated when the sum of the total numbers of time slots requested for transmission exceeds the number of time slots used for communications. The number of time slots assigned to each of the subscriber stations is determined from the product of the number of time slots requested for transmission by each of the subscriber station and the ratio.

FIG.11

**Description**

Field of the Invention

The present invention relates to a time slot assigning method for use with a radio communications system which carries out divisional use of a radio channel by using a TDMA method, the radio communications system including a base station and two or more subscriber stations.

Background of the Invention

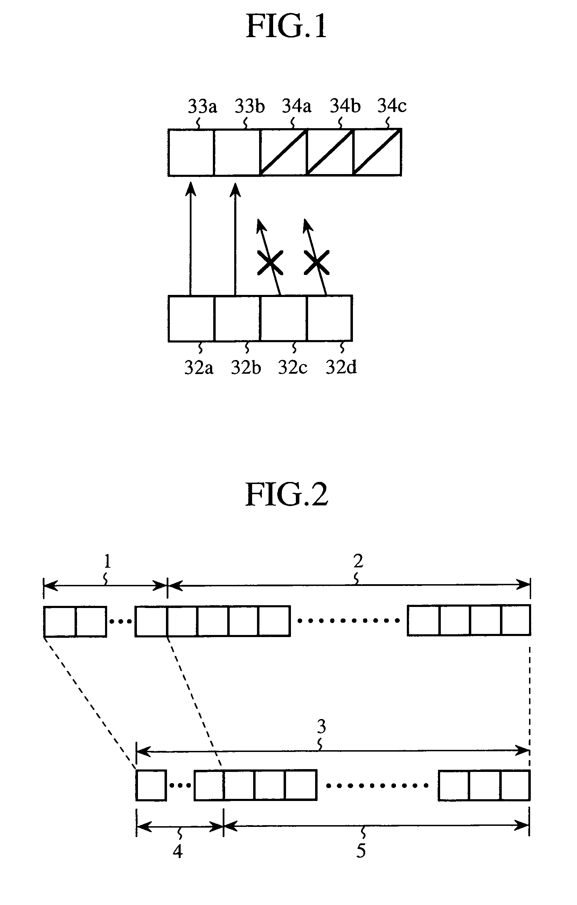

Fig. 1 is a diagram showing a prior art time slot assigning method for use with a radio communications system. In the figure, reference symbols 32a, 32b, 32c, and 32d denote transmission requests respectively transmitted from four subscriber stations, reference symbols 33a and 33b denote idle time slots for communications of a base station, and reference symbols 34a, 34b, and 34c denote time slots of the base station currently being used for communications.

Next, the operation of the prior art radio communications system will be explained.

In accordance with the prior art time slot assigning method, when the number of idle time slots for communication of the base station is larger than the number of subscriber stations which have newly made transmission requests, time slots used for communications from the base station to the subscriber stations and time slots used for communications from the subscriber stations to the base station are assigned simultaneously. Furthermore, when the number of idle time slots 33a and 33b for communication of the base station is smaller than the number of transmission requests 32a, 32b, 32c, and 32d newly made by the subscriber stations, the base station assigns the idle time slots 33a and 33b for communication to the subscriber stations which have transmitted the transmission requests 32a and 32b thereto at earlier times while the base station refuses communications with the other subscriber stations which have transmitted the transmission requests 32c and 32d thereto at later times without assigning any idle time slot for communication to the other subscriber stations.

A problem with the prior art time slot assigning method mentioned above is that any subscriber station cannot make a request for use of an arbitrary number of time slots. Another problem is that even if a subscriber station makes a request for use of an arbitrary number of time slots, when some subscriber stations make a request for use of a large number of time slots, the time slots used for communications via the radio channel are occupied by those subscriber stations depending on a time slot assignment method, and therefore inconsistencies in the assignment of time slots to other subscriber stations, such as refusal or disconnection of the communications between the base station and the other subscriber stations in the TDMA radio communications system, occur.

The present invention is made in order to solve the above-mentioned problems, and it is therefore an object of the present invention to provide a time slot assigning method for use with a radio communications system, which, even when some subscriber stations make a request for use of a large number of time slots and the time slots used for communications via the radio channel are occupied by those subscriber stations, can prevent inconsistencies in the assignment of time slots to other subscriber stations, such as refusal or disconnection of the communications between a base station and the other subscriber stations, from occurring.

Disclosure of the Invention

In accordance with the present embodiment, there is provided a time slot assigning method for use with a radio communications system, the method including: a step of calculating a ratio of a number of time slots used for communications via a radio channel to a sum of a total number of time slots requested for transmission by a base station and a sum total of numbers of time slots respectively requested for transmission by subscriber stations when the sum of the total numbers of time slots requested for transmission exceeds the number of time slots used for communications; a step of determining a total number of time slots assigned to the base station and a sum total of numbers of time slots respectively assigned to the subscriber stations from the total numbers of time slots requested for transmission and the ratio; and a step of determining a number of time slots assigned to each of the subscriber stations from a product of the number of time slots requested for transmission by each of the subscriber station and the ratio.

Therefore, the present invention offers an advantage of, even when some subscriber stations make a request for use of a large number of time slots, being able to prevent the time slots used for communications from being occupied by those subscriber stations and hence to prevent inconsistencies in the assignment of time slots to other subscriber stations, such as disconnection of the communications between the base station and the other subscriber stations, from occurring.

According to the time slot assigning method for use with a radio communications system according to the present invention, the number of time slots requested for transmission of said base station by each of the subscriber stations is acquired on a frame-by-frame basis.

Therefore, the present invention offers another advantage of being able to respond to instant changes in the total number of time slots requested for transmission.

According to the time slot assigning method for use with a radio communications system according to the present invention, the numbers of time slots respectively requested for transmission by the subscriber stations are acquired over multiple frames, and the number of time slots assigned to each of the subscriber stations and the number of time slots assigned to said base station are determined for multiple frames at a time.

Therefore, the present invention offers a further advantage of being able to reduce the number of times which time slots requested for transmission collide and to reduce the number of time slots used for acquisition of requests for transmission.

According to the time slot assigning method for use with a radio communications system according to the present invention, the subscriber stations belonging to said base station are divided into a plurality of groups, and the number of time slots requested for transmission of said base station by each of the subscriber stations is periodically acquired on a group-by-group basis.

Therefore, the present embodiment offers a still further advantage of reducing the number of time slots used for acquisition of requests for transmission and to reduce the number of computations required to assign time slots to subscriber stations included in each group.

Brief Description of the Figures

Fig. 1 is a diagram showing a prior art time slot assigning method;
Fig. 2 is a diagram showing a relationship between the total number of assigned time slots which is determined by a time slot assigning method for use with a radio communications system according to embodiment 1 of the present invention, and the total number of time slots requested for transmission;
Fig. 3 is a diagram showing notifications transmitted between a base station and each subscriber station in the communications system according to embodiment 1 of the present invention;
Fig. 4 is a flow chart of time slot assigning processing which the base station performs by using the time slot assigning method according to embodiment 1 of the present invention;
Fig. 5 is a diagram showing an example of communications between the base station and each subscriber station in the radio communications system according to embodiment 1 of the present invention;
Fig. 6 is a diagram showing a communication procedure for carrying out communications between a base station and each subscriber station in a radio communications system according to embodiment 2 of the present invention;
Fig. 7 is a diagram showing changes in the communication status of the communications system according to embodiment 2 of the present invention;
Fig. 8 is a diagram showing a communication procedure for carrying out communications between a base station and each subscriber station in a radio communications system according to embodiment 3 of the present invention;
Fig. 9 is a diagram showing a communication procedure for carrying out communications between a base station and each subscriber station in a radio communications system according to embodiment 4 of the present invention;
Fig. 10 is a diagram showing positions where time slots are assigned by using a time slot assigning method of the radio communications system according to embodiment 4 of the present invention; and
Fig. 11 is a diagram showing the structure of the radio communications system according to embodiment 1 of the present invention.

Preferred Embodiments of the Invention

Hereafter, in order to explain this invention in greater detail, the preferred embodiments of the present invention will be described with reference to the accompanying drawings.

Embodiment 1.

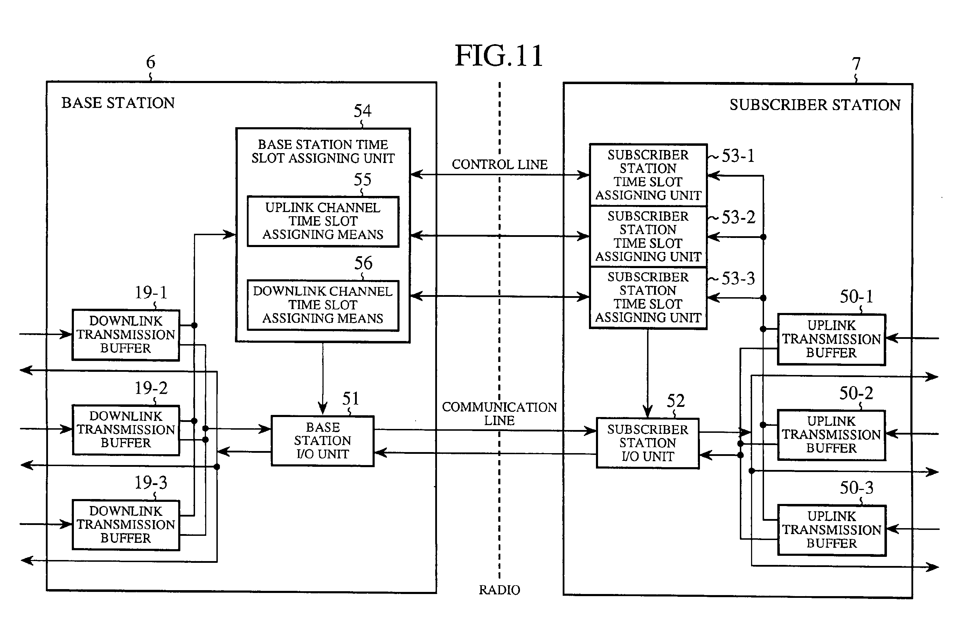

Fig. 11 is a diagram showing the structure of a radio communications system according to embodiment 1 of the present invention. Fig. 11 shows a case where three subscriber stations exist within a communication area of a base station. In Fig. 11, reference numeral 6 denotes the base station, reference numeral 7 denotes the three subscriber stations each of which transmits and receives data to and from the base station 6 via a radio channel, reference symbols 19-1, 19-2, and 19-3 denote downlink transmission buffers each for temporarily storing downlink transmission data transmitted from a network (not shown), to which the base station 6 is connected, to each terminal unit (not shown) to which each subscriber station is connected, reference symbols 50-1, 50-2, and 50-3 denote uplink transmission buffers each for temporarily storing uplink transmission data transmitted from each terminal unit to the network, reference numeral 51 denotes a base station I/O device for carrying out radio transmission of data stored in the downlink transmission buffers 19-1, 19-2, and 19-3 via a communication line, and for receiving data stored in the uplink transmission buffers via the communication line, and reference numeral 52 denotes a subscriber station I/O unit for carrying out radio transmission of the data stored in the uplink transmission buffers 50-1, 50-2, and 50-3 via the communication line.

Reference numerals 53-1, 53-2, and 53-3 denote subscriber station slot assigning units each for carrying out radio transmission of an assignment request signal having information indicating the amount of data stored in a corresponding one of the uplink transmission buffers 50-1, 50-2, and 50-3, and each for, in response to an assignment notification signal transmitted thereto via a control line, outputting a control signal to the subscriber station I/O unit 52 so as to cause the subscriber station I/O unit 52 to transmit data using time slots specified by the assignment notification signal.

Reference numeral 54 denotes a base station time slot assigning unit for outputting information about each of the downlink transmission buffers 19-1, 19-2, and 19-3, in which data are stored, to the base station I/O unit 51, for assigning time slots, as timings at which the subscriber stations 7-1, 7-2, and 7-3 from which the base station has received assignment request signals, respectively, to the subscriber stations 7-1, 7-2, and 7-3, and for carrying out radio transmission of the assignment notification signals indicating the assignment of the time slots via the control line, reference numeral 55 denote an uplink channel time slot assigning means for carrying out assigning processing, and reference numeral 56 denotes a downlink channel time slot assigning means for carrying out assigning processing. The combination of the uplink channel time slot assigning means 55 and the downlink channel time slot assigning means 56 corresponds to a time slot assigning means.

Fig. 2 is a diagram showing a relationship between the total number of assigned time slots which is determined by a time slot assigning method for use with the radio communications system according to embodiment 1 of the present invention, and the total number of time slots requested for transmission. In Fig. 2, reference numeral 1 denotes the sum total of the numbers of time slots respectively requested for transmission by the subscriber stations, reference numeral 2 denotes the total number of time slots requested for transmission by the base station, reference numeral 3 denotes the number of time slots used for communications in each frame, reference numeral 4 denotes the sum total of the numbers of time slots respectively assigned to the subscriber stations, and reference numeral 5 denotes the total number of time slots assigned to the base station.

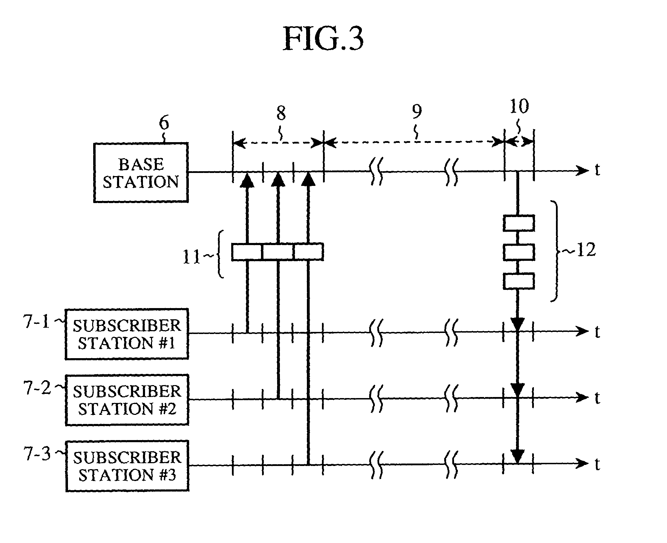

Fig. 3 is a diagram showing notifications transmitted between the base station and each subscriber station in the radio communications system according to embodiment 1 of the present invention. In Fig. 3, reference numeral 6 denotes the base station, and reference symbols 7-1, 7-2, and 7-3 denote the subscriber stations, respectively, reference numeral 8 denotes an acquisition time period during which the base station 6 acquires the numbers of time slots respectively requested for transmission by the subscriber stations 7-1, 7-2, and 7-3 (each of which is referred to as "each subscriber station 7" from here on), reference numeral 9 denotes an assignment calculation time period, reference numeral 10 denotes a notification time period during which the base station 6 notifies each subscriber station 7 of the number of time slots assigned to each subscriber station 7 as a result of the assignment calculation, reference numeral 11 denotes a notification indicating the number of time slots requested for transmission, and reference numeral 12 denotes a notification indicating the number of assigned time slots. In Fig. 3, a horizontal axis shows a time base t.

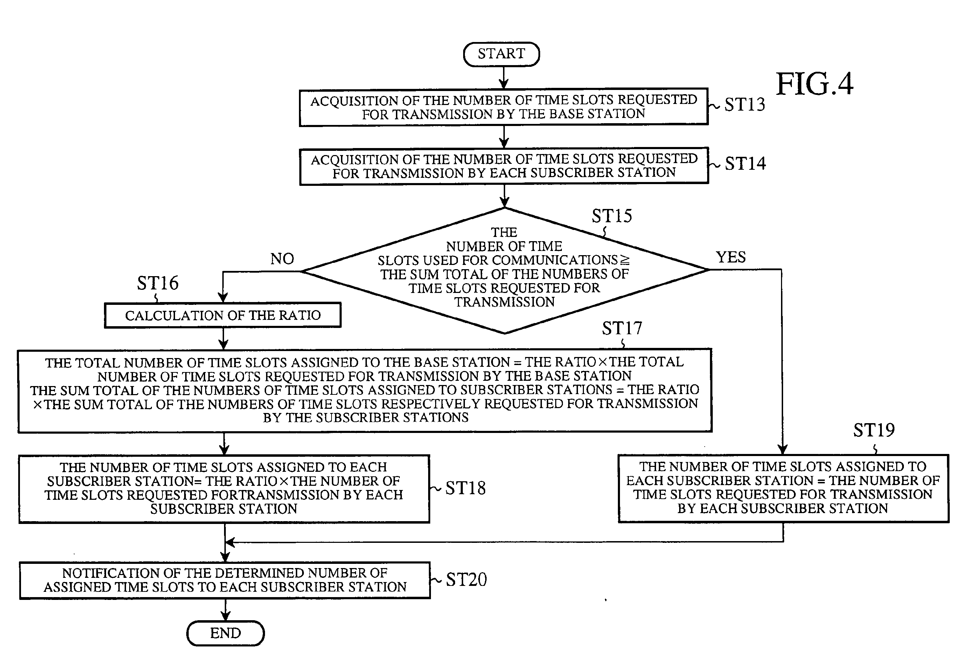

Fig. 4 is a flow chart of time slot assigning processing which the base station performs by using the time slot assigning method according to embodiment 1 of the present invention. In Fig. 4, step ST13 is a process of acquiring the numbers of time slots requested for transmission by the base station 6. Step ST14 is a process of acquiring the number of time slots requested for transmission by each subscriber station 7,

Step ST15 is a process of determining whether the sum total of the numbers of time slots requested for transmission, which are acquired in step ST13 and step ST14, (i.e., the sum of the sum total 1 of the numbers of time slots requested for transmission and the sum total 2 of the number of time slots requested for transmission) exceeds the number of time slots used for communications (i.e., the number 3 of time slots used for communications in each frame of Fig. 2). Step ST16 is a process of calculating the ratio of the number of time slots used for communications to the sum total of the numbers of time slots requested for transmission. Step ST17 is a process of determining the total number of time slots assigned to the base station 6 and the sum total of the numbers of time slots respectively assigned to the subscriber stations 7 (i.e., the sum total 4 of the numbers of time slots respectively assigned to the subscriber stations of Fig. 2) by using the ratio calculated in step ST16.

Step ST18 is a process of determining the number of time slots assigned to each subscriber station 7 when the sum total of the numbers of time slots requested for transmission exceeds the total number of time slots used for communications. Step ST19 is a process of determining the number of time slots assigned to each subscriber station 7 when the sum total of the numbers of time slots requested for transmission is smaller than the total number of time slots used for communications. Step ST20 is a process of notifying each subscriber station 7 of the number of time slots assigned to each subscriber station 7, which is determined in step ST18 or step ST19.

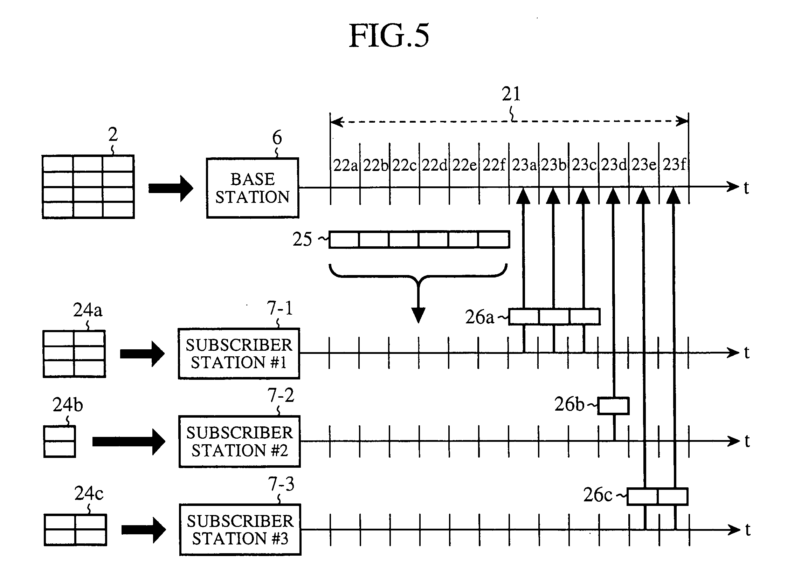

Fig. 5 is a diagram showing an example of communications between the base station and each subscriber station in the radio communications system according to embodiment 1 of the present invention. In Fig. 5, reference numeral 21 denotes a communication period in one frame, reference symbols 22a, 22b, 22c, 22d, 22e, and 22f denote time slots assigned to the base station 6, reference symbols 23a, 23b, 23c, 23d, 23e, and 23f denote time slots assigned to the subscriber stations 7, reference symbols 24a, 24b, and 24c denote the numbers of time slots respectively requested for transmission by the subscriber stations 7, reference numeral 25 denotes communications from the base station 6 to the subscriber stations 7, and reference symbols 26a, 26b, and 26c denote communications from the subscriber stations 7 to the base station 6, respectively. In Fig. 5, a horizontal axis shows a time base t.

Next, the operation of the radio communication system in accordance with embodiment 1 of the present invention will be explained.

The time slot assigning method according to the present invention will be explained with reference to Fig. 2. When the sum of the sum total 1 of the numbers of time slots respectively requested for transmission by the subscriber stations 7 and the sum total 2 of the number of time slots requested for transmission by the base station 6 exceeds the number 3 of time slots used for communications included in each frame, the ratio between them is calculated and the sum total 4 of the numbers of time slots respectively assigned to the subscriber stations 7 and the total number 5 of time slots assigned to the base station 6 is acquired so that they fall within limits defined by the number 3 of time slots used for communications included in one frame. The following equation (1) is used for the calculation of the ratio, the following equation (2) is used for the calculation of the sum total 4 of the numbers of time slots respectively assigned to the subscriber stations 7, and the following equation (3) is used for the calculation of the total number 5 of time slots assigned to the base station 6.

$$\alpha = NT/(\Sigma N1 + \Sigma N2) \tag{1}$$

$$\Sigma M1 = \alpha \times \Sigma N1 \tag{2}$$

$$\Sigma M2 = \alpha \times \Sigma N2 \tag{3}$$

Symbols included in the equations (1) to (3) represent the following numbers, respectively.

$\alpha$: the ratio

NT: the number of time slots used for communications included in each frame

$\Sigma N1$: the sum total of the numbers of time slots respectively requested for transmission by the subscriber stations

$\Sigma N2$: the sum total of the number of time slots requested for transmission by the base station

$\Sigma M1$: the sum total of the numbers of time slots respectively assigned to the subscriber stations

$\Sigma M2$: the total number of time slots assigned to the base station

According to the flow chart of Fig. 4, the time slot assigning method will be explained with reference to Figs. 3 and 5.

First, the base station 6, in step ST13, acquires the sum total 2 of the number of time slots used for transmission requests made thereby. In the example of Fig. 5, the sum total 2 of the number of time slots requested for transmission by the base station 6 (i.e., $\Sigma N2$) is 12.

Then, the sum total 1 of the numbers of time slots respectively requested for transmission by the subscriber stations is acquired in step ST14. In the example of Fig. 5, the numbers 24a, 24b, and 24c of time slots respectively requested for transmission by the subscriber stations 7 are 6, 2, and 4, respectively, and the subscriber stations 7 send notification signals 11a, 11b, and 11c respectively indicating the numbers of time slots respectively requested for transmission thereby to the base station 6 during the acquisition time period 8 (see Fig. 3), respectively. Therefore, in the example of Fig. 5, the sum total 1 (i.e., $\Sigma N1$) of the numbers of time slots respectively requested for transmission by the subscriber stations is equal to 12.

Then, the sum of the sum total of the number of time slots requested for transmission by the base station 6 and the sum total of the numbers of time slots respectively requested for transmission by the subscriber stations 7 (i.e., $\Sigma N1 + \Sigma N2$: the sum of the sum total 1 of the numbers of time slots respectively requested for transmission by the subscriber stations and the sum total 2 of the number of time slots requested for transmission by the base station which are shown in Fig. 2) is compared with the number of time slots used for communications (i.e., NT: the number 3 of time slots used for communications included in each frame of Fig. 2), in step ST15. In the example of Fig. 5, since the sum (i.e., $\Sigma N1 + \Sigma N2$) of the number of time slots requested for transmission by the base station 6 and the sum total of the numbers of time slots respectively requested for transmission by the subscriber stations 7 is 24 (= 12+6+2+4), the number of time slots used for communications (i.e., NT) is 12, and the sum total of the numbers of time slots requested for transmission exceeds the number of time slots used for communications, the time slot assigning method advances to step ST16.

Then, the ratio (i.e., $\alpha$) of the number of time slots used for communications to the sum of the sum total of the number of time slots requested for transmission by the base station 6 and the sum total of the numbers of time slots respectively requested for transmission by the subscriber stations 7 is calculated in step ST16. The ratio is calculated by using the equation (1). In the example of Fig. 5, $\alpha = 12/24 = 0.5$.

Then, both the total number of time slots assigned to the base station 6 (i.e., $\Sigma M2$: the sum total 4 of the numbers of time slots respectively assigned to the subscriber stations of Fig. 2) and the sum total of the numbers of time slots respectively assigned to the subscriber stations 7 (i.e., $\Sigma M1$: the total number 5 of time slots assigned to the base station of Fig. 2) are calculated in step ST17. The sum total of the numbers of time slots respectively assigned to the subscriber stations 7 (i.e., $\Sigma M1$) is calculated by using the equation (2), and the total number of time slots assigned to the base station 6 (i.e., $\Sigma M2$) is calculated by using the equation (3). In the example of Fig. 5, the sum total of the numbers of time slots respectively assigned to the subscriber stations 7 (i.e., $\Sigma M1$) = 0.5x12 = 6, and the total number of time slots assigned to the base station 6 (i.e., $\Sigma M2$) = 0.5x12 = 6.

The number of time slots assigned to each subscriber station 7 (i.e., M1) is then calculated in step ST18. The number of time slots assigned to each subscriber station 7 (i.e., M1) is calculated by using the following equation (4).

$$M1 = \alpha \times N1 \qquad (4)$$

The variables in the equation (4) represent the following numbers.

M1: the number of time slots assigned to each subscriber station
N1: the number of time slots requested for transmission by each subscriber station

In the example of Fig. 5, the number of time slots assigned to the subscriber station 7-1 (M1) = 0.5x6 = 3, the number of time slots assigned to the subscriber station 7-2 (M2) = 0.5x2 = 1, the number of time slots assigned to the subscriber station 7-3 (M3) = 0.5x4 = 2.

The base station 6 then, in step ST20, notifies each subscriber station 7 of the number of time slots assigned to each subscriber station 7. As shown in Fig. 3, the base station 6 performs the notification processing during the notification time period 10 by using a notification signal 12 indicating the number of time slots assigned to each subscriber station.

Then, based on the determined number of time slots assigned to each subscriber station 7, each subscriber station 7 carries out communications 26a, 26b, and 26c (see Fig. 5) with the base station 6.

The steps ST15, ST16, ST17, and ST18 are performed within the assignment calculation time period 9 (see Fig. 3) during which the assigning processing is preformed.

Although the step ST19 is not performed in the example of Fig. 5, it is performed when the sum of the sum total 1 of the numbers of time slots respectively requested for transmission by the subscriber stations 7 and the total number 2 of time slots requested for transmission by the base station 6 is equal to or less than the number 3 of time slots used for communications included in each frame. In step ST19, the number of time slots requested for transmission by each subscriber station is set to the number of time slots assigned to each subscriber station, just as it is.

The time slot assigning method according to the present invention can be also applied to a case where either TDD (time-division two-way-communications method) or FDD (frequency-division duplex method) is used as a duplex method.

As mentioned above, according to the time slot assigning method of this embodiment, when the sum of the total number of time slots requested for transmission by the base station 6 and the sum total of the numbers of time slots respectively requested for transmission by the subscriber stations 7 exceeds the number of time slots used for communications via the radio channel, the ratio of the total number of time slots used for communications to the sum total of the numbers of time slots requested for transmission is calculated and the number of time slots assigned to each subscriber station 7 is determined based on this ratio. Therefore, the present embodiment offers an advantage of, even when some subscriber stations make a request for use of a large number of time slots, being able to prevent the time slots used for communications from being occupied by those subscriber stations and hence to prevent inconsistencies in the assignment of time slots to other subscriber stations, such as disconnection of the communications between the base station and the other subscriber stations, from occurring.

As mentioned above, the time slot assigning method used by the radio communications system according to this embodiment 1 includes the process (step ST16) of calculating the ratio (equation (1)) of the number of time slots used for communications to the sum total of the numbers of time slots requested for transmission when the sum of the sum total 1 of the numbers of time slots respectively requested for transmission by the subscriber stations and the sum total 2 of the number of time slots requested for transmission by the base station exceeds the number 3 of time slots used for communications via the radio channel, the process (step ST17) of determining the sum total of the numbers of time slots respectively assigned to the subscriber stations and the sum total of the number of time slots assigned to the base station from the product (equation (2)) of the sum total of the numbers of time slots respectively requested for transmission by the subscriber stations and the ratio and the product (equation (3)) of the sum total of the number of time slots requested for transmission by the base station and the ratio, and the process (step ST18) of determining the number of time slots assigned to each subscriber station from the product (equation (4)) of the number of time slots requested for transmission by each subscriber station and the ratio.

As can be seen from the above description, in accordance with the time slot assigning method of this embodiment 1, when the sum total of the numbers of time slots respectively requested for transmission by the base station and the subscriber stations exceeds the number of time slots used for communications via the radio channel, the ratio of the total number of time slots used for communications to the sum total of the numbers of time slots requested for transmission is calculated and the number of time slots assigned to each subscriber station is determined based on this ratio. Therefore, the present embodiment offers the advantage of, even when some subscriber stations make a request for use of a large number of time slots, being able to prevent the time slots used for communications from being occupied by those subscriber stations and hence to prevent inconsistencies in the assignment of time slots to other subscriber stations, such as disconnection of the communications between the base station and the other subscriber stations, from occurring.

Embodiment 2.

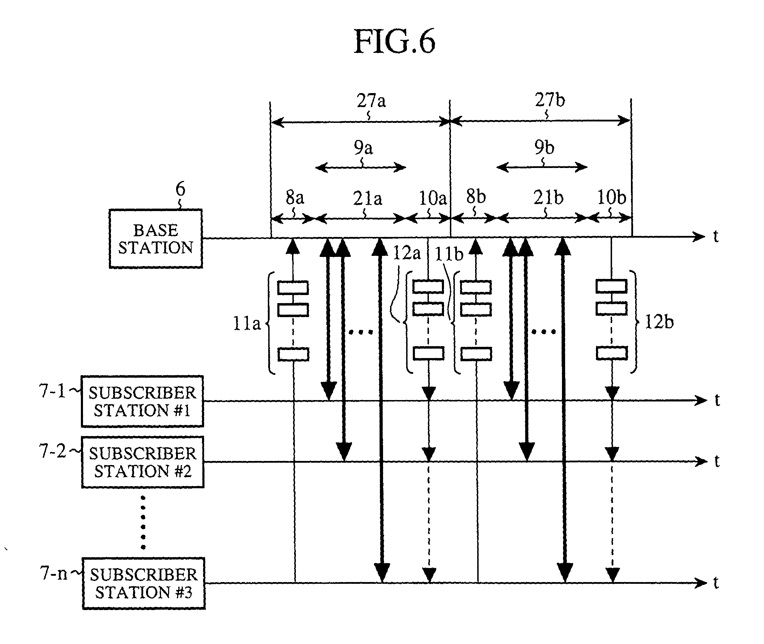

Fig. 6 is a diagram showing a communication procedure for carrying out communications between a base station and each subscriber station according to embodiment 2 of the present invention. The communication procedure according to this embodiment 2, which will be explained below, uses the time slot assigning method explained in embodiment 1.

In Fig. 6, reference symbols 27a and 27b denote frames in a TDMA radio communications system according to embodiment 2, reference symbol 8a denotes an acquisition time period for the frame 27a, reference symbol 9a denotes an assignment calculation time period for the frame 27a, reference symbol 10a denotes a notification time period for the frame 27a, reference symbol 11a denotes a notification indicating the number of time slots requested for transmission for the frame 27a, reference symbol 12a denotes a notification indicating the number of assigned time slots for the frame 27a, and reference symbol 21a denotes a communication time period for the frame 27a, reference symbol 8b denotes an acquisition time period for the frame 27b, reference symbol 9b denotes an assignment calculation time period for the frame 27b, reference symbol 10b denotes a notification time period for the frame 27b, reference symbol 11b denotes a notification indicating the number of time slots requested for transmission for the frame 27b, reference symbol 12b denotes a notification indicating the number of assigned time slots for the frame 27b, and reference symbol 21b denotes a communication time period for the frame 27b, and reference symbols 7-1, 7-2, ..., 7-n denote subscriber stations. The system of the example of Fig. 6 has the n subscriber stations (n is a positive integer equal to or larger than 3). In Fig. 6, a horizontal axis shows a time base t.

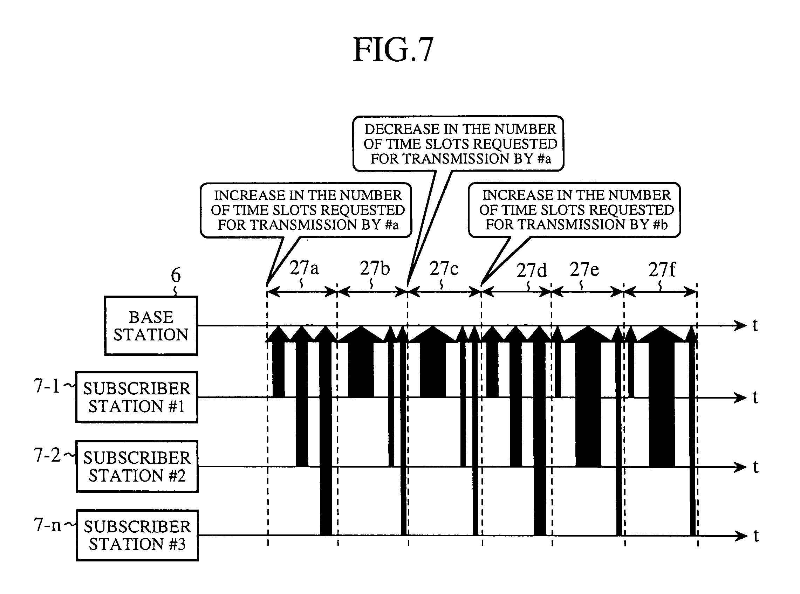

Fig. 7 is a diagram showing changes in the communication status of the communications system according to embodiment 2 of the present invention. In Fig. 7, reference symbols 27a, 27b, 27c, 27d, 27e, and 27f denote frames in the TDMA radio communications system. In Fig. 7, a horizontal axis shows a time base t.

Next, the operation of the radio communications system in accordance with embodiment 2 of the present invention will be explained.

The radio communications system according to embodiment 2 will be explained using an example. For the frame 27a, the base station acquires the notification 11a indicating the number of time slots requested for transmission by each subscriber station 7-1, 7-2, ...,

or 7-n (simply referred to as "each subscriber station 7" from here on) during the acquisition time period 8a, as in the case of Fig. 3, and performs assigning calculation according to the flow chart of Fig. 4 during the assignment calculation time period 9a. The base station then sends the notification 12a indicating the number of time slots assigned to each subscriber station 7 to each subscriber station 7 during the notification time period 10a. Also for the frame 27b, the base station acquires the notification 11b indicating the number of time slots requested for transmission by each subscriber station 7 during the acquisition time period 8b, as in the case of Fig. 3 (Fig. 2), and performs assigning calculation according to the flow chart of Fig. 4 during the assignment calculation time period 9b. The base station then sends the notification 12b indicating the number of time slots assigned to each subscriber station 7 to each subscriber station 7 during the notification time period 10b. During the assignment calculation time periods 9a and 9b, according to the flow chart of Fig. 4, when the sum total of the numbers of time slots requested for transmission exceeds the total number of time slots used for communications, the ratio of the total number of time slots used for communications to the sum total of the numbers of time slots requested for transmission is calculated and time slot assignment processing is carried out using the ratio. The equations (1), (2), (3), and (4) are used for this calculation.

Each frame includes such four time periods as acquisition, communication, assignment calculation, and notification time periods, and the communication time period and the assignment calculation time period coexist. Communications based on a result of the assignment calculation are carried out during the communication time period of the next frame.

In the example of Fig. 7, the three subscriber stations 7-1, 7-2, and 7-3 exist in the system, and only communications between the base station 6 and each of the three subscriber stations 7-1, 7-2, and 7-3 (simply referred to as "each subscriber station 7" from here on) is shown.

Since the numbers of time slots respectively requested for transmission by the three subscriber stations 7 are equal for the frame 27a, the numbers of time slots respectively assigned to the three subscriber stations 7 also become equal and all the subscriber stations communicate with the base station at equal intervals.

When the number of time slots requested for transmission by the subscriber station 7-1 increases for the frame 27b, since the sum total of the numbers of time slots respectively requested for transmission by the subscriber stations exceeds the total number of time slots used for communications, the calculation of the ratio of the total number of time slots used for communications to the sum total of the numbers of time slots requested for transmission, etc. are carried out by using the equations (1), (2), (3), and (4) according to the flow chart of Fig. 4, and the number of time slots assigned to each subscriber station is determined. In this case, while the number of time slots assigned to the subscriber station 7-1 increases, the number of time slots respectively assigned to the subscriber stations 7-2 and 7-3 is not set to 0.

For the frame 27c, since the number of time slots requested for transmission by each subscriber station 7 is equal to that for the frame 27b, the number of time slots assigned to each subscriber station becomes equal to that for the previous frame (i.e., the frame 27b).

For the frame 27d, the number of time slots requested for transmission by the subscriber station 7-1 decreases and then becomes equal to that by each of the subscriber stations 7-2 and 7-3. As a result, the number of time slots assigned to each subscriber station also returns to the previous value set to the frame 27a, and all the subscriber stations communicate with the base station at equal intervals.

For the frame 27e, the number of time slots requested for transmission by the subscriber station 7-2 increases. Since the sum total of the numbers of time slots respectively requested for transmission by the subscriber stations exceeds the total number of time slots used for communications, the number of time slots assigned to each subscriber station is determined by using the time slot assigning method according to the present invention. In this case, while the number of time slots assigned to the subscriber station 7-2 increases, the number of time slots respectively assigned to the subscriber stations 7-1 and 7-3 is not set to 0.

For the frame 27f, since the number of time slots requested for transmission by each subscriber station is equal to that for the frame 27e, the number of time slots assigned to each subscriber station becomes equal to that for the previous frame (i.e., the frame 27e).

As mentioned above, in accordance with the communication procedure of embodiment 2 of the present invention, since four time periods, such as collection, communication, assignment calculation, and notification time periods, exist in each frame, the number of time slots assigned to each subscriber station can be varied on a frame-by-frame basis immediately after the number of time slots requested for transmission by some subscriber stations is changed.

As mentioned above, the time slot assigning method used by the radio communications system according to this embodiment 2 includes the process (step ST16) of calculating the ratio (equation (1)) of the number of time slots used for communications to the sum total of the numbers of time slots requested for transmission when the sum of the sum total 1 of the numbers of time slots respectively requested for transmission by the subscriber stations and the sum total 2 of the number of time slots requested for transmission by the base station exceeds the number 3 of time slots used for communications via the radio channel, the process (step ST17) of determining the sum total of the numbers of time slots respectively assigned to the subscriber stations and the sum total of the number of time slots assigned to the base station from the product (equation (2)) of the sum total of the numbers of time slots respectively requested for transmission by the subscriber stations and the ratio and the product (equation (3)) of the sum total of the number of time slots requested for transmission by the base station and the ratio, and the process (step ST18) of determining the number of time slots assigned to each subscriber station from the product (equation (4)) of the number of time slots requested for transmission by each subscriber station and the ratio. Then, the numbers 11a and 11b of time slots which the plurality of subscriber stations 7-1 to 7-n respectively request the base station 6 to assign for transmission are acquired for the frames 27a and 27b, respectively.

As can be seen from the above description, since the acquisition of the numbers of time slots respectively requested for transmission by the subscriber stations, the assignment calculation, and the updating notification are performed for each frame using the time slot assigning method according to embodiment 1, this embodiment 2 offers a further advantage of being able to respond to instant changes in the total number of time slots requested for transmission, in addition to the advantage provided by embodiment 1 of the present invention.

Embodiment 3.

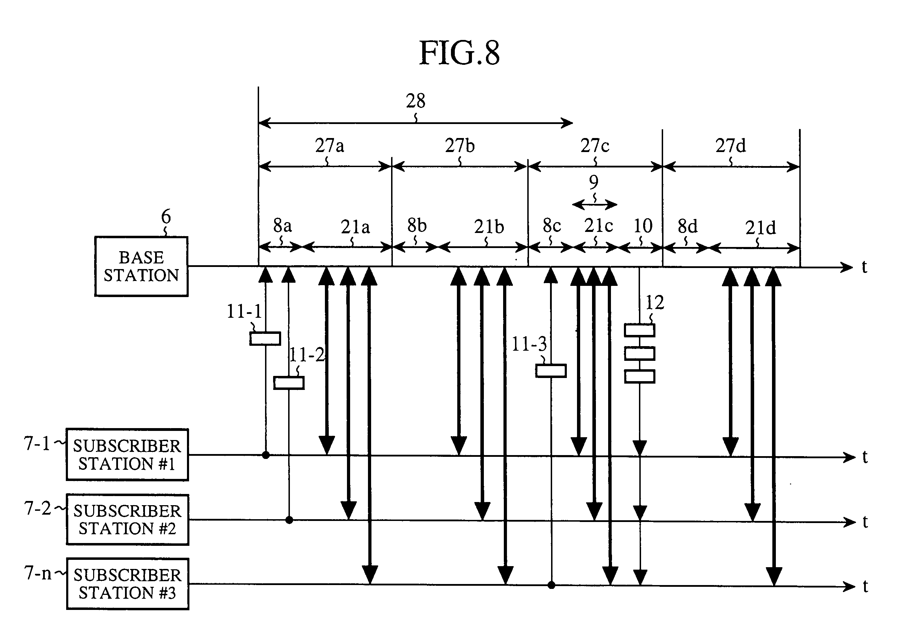

Fig. 8 is a diagram showing a communication procedure for carrying out communications between a base station and each subscriber station according to embodiment 3 of the present invention. The communication procedure according to this embodiment 3, which will be explained below, uses the time slot assigning method explained in embodiment 1. In Fig. 8, reference numeral 28 denotes a time period during which the numbers of time slots respectively requested for transmission by subscriber stations 7-1 to 7-3 are acquired over several frames. Reference symbols 27a, 27b, 27c, and 27d denote frames of a radio communications system according to embodiment 2, respectively.

Reference symbol 8a denotes an acquisition time period for the frame 27a, reference symbol 11-1 denotes a notification indicating the number of time slots requested for transmission by the subscriber station 7-1 for the frame 27a, reference symbol 11-2 denotes a notification indicating the number of time slots requested for transmission by the subscriber station 7-2 for the frame 27a, and reference symbol 21a denotes a communication time period for the frame 27a. Reference symbol 8b denotes an acquisition time period for the frame 27b, and reference symbol 21b denotes a communication time period for the frame 27b.

Reference symbol 8c denotes an acquisition time period for the frame 27c, reference numeral 9 denotes an assignment calculation time period for the frame 27c, reference numeral 10 denotes a notification time period for the frame 27c, reference symbol 11-3 denotes a notification indicating the number of time slots requested for transmission by the subscriber station 7-3 for the frame 27c, reference numeral 12 denotes a notification indicating the number of assigned time slots for the frame 27c, and reference symbol 21c denotes a communication time period for the frame 27c. Reference symbol 8d denotes an acquisition time period for the frame 27d, and reference symbol 21d denotes a communication time period for the frame 27d. In Fig. 8, a horizontal axis shows a time base t.

Next, the operation of the communications system in accordance with embodiment 3 of the present invention will be explained.

The communication procedure according to embodiment 3 will be explained by taking, as an example, a case as shown in Fig. 8 where the numbers of time slots requested for transmission by the subscriber stations are acquired over the three frames 27a, 27b, and 27c. The notifications 11-1 and 11-2 respectively indicating the numbers of time slots requested for transmission by the subscriber stations 7-1 and 7-2 are acquired for the frame 27a within the acquisition time period 8a in the time period 28 during which the notifications 11a, 11b, and 11c respectively indicating the numbers of time slots requested for transmission by the subscriber stations 7-1, 7-2, and 7-3 (each of which is referred to as "each subscriber station 7" from here on) are acquired. Since any notification indicating the number of time slots requested for transmission is not made for the frame 27b by the subscriber station 7-3, no notification is acquired during the acquisition time period 8b. After that, the notification 11-3 indicating the number of time slots requested for transmission by the subscriber station 7-3 is acquired for the frame 27c during the acquisition time period 8c.

The base station performs assigning calculation during the assignment calculation time period 9 according to the flow chart of Fig. 4, and sends the notification 12 indicating the number of time slots assigned to each subscriber station 7 to each subscriber station 7 during the notification time period 10. The equations (1), (2), (3), and (4) are used for this calculation. Communications based on the notification 12 indicating the number of assigned time slots are carried out during the communication time period 21d of the next or later frame 27d.

This embodiment 3 is explained by taking, as an example, the case where there are three subscriber stations and the acquisition time period is spread out over three frames. This embodiment 3 can be also applied to a case where there are n subscriber stations and the acquisition time period is spread out over m frames (m is an integer equal to or larger than 4).

According to the communication procedure of this embodiment 3, the assigning calculation and notification processing is performed on several frames once, and the acquisition time period is spread out over some frames. Therefore, the communication procedure of this embodiment 3 makes it possible to reduce the number of time slots used for acquisition of requests for transmission within each frame. As a result, compared with the case where the four time periods: the acquisition, communication, assigning calculation, and notification time periods are provided in each frame, the number of time slots used for acquisition of requests for transmission can be reduced and the load of the assigning calculation can be reduced. Since the acquisition processing is repeated for the three frames in the example of Fig. 8, the number of time slots used for acquisition of requests for transmission in which the number of time slots requested for transmission is transmitted during one acquisition time period can be reduced to one-third that in the case where the four time periods: the acquisition, communication, assigning calculation, and notification time periods are provided in each frame.

As mentioned above, the time slot assigning method used by the radio communications system according to this embodiment 3 includes the process (step ST16) of calculating the ratio (equation (1)) of the number of time slots used for communications to the sum total of the numbers of time slots requested for transmission when the sum of the sum total 1 of the numbers of time slots respectively requested for transmission by the subscriber stations and the sum total 2 of the number of time slots requested for transmission by the base station exceeds the number 3 of time slots used for communications via the radio channel, the process (step ST17) of determining the sum total of the numbers of time slots respectively assigned to the subscriber stations and the sum total of the number of time slots assigned to the base station from the product (equation (2)) of the sum total of the numbers of time slots respectively requested for transmission by the subscriber stations and the ratio and the product (equation (3)) of the sum total of the number of time slots requested for transmission by the base station and the ratio, and the process (step ST18) of determining the number of time slots assigned to each subscriber station from the product (equation (4)) of the number of time slots requested for transmission by each subscriber station and the ratio. The numbers 11-1 to 11-3 of time slots respectively requested for transmission by the subscriber stations 7-1 to 7-3 are then acquired over several frames 27a and 27b, and the number of time slots assigned to each subscriber station and the number of time slots assigned to the base station are determined for multiple frames 27a to 27d once (i.e., during the assignment calculation time period 9).

As can be seen from the above description, this embodiment 3 offers an advantage of being able to reduce the number of times which time slots requested for transmission collide and to reduce the number of time slots used for acquisition of requests for transmission because the number of time slots requested for transmission by each subscriber station is acquired over several frames, in addition to the advantages provided by embodiment 1.

Embodiment 4.

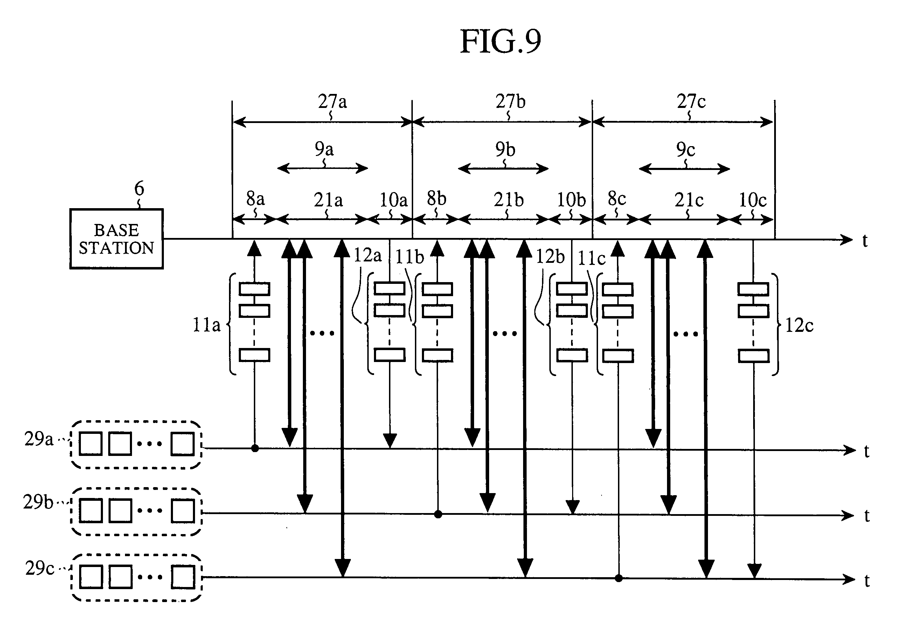

Fig. 9 is a diagram showing a communication procedure for carrying out communications between a base station and each subscriber station according to embodiment 4 of the present invention. The communication procedure according to this embodiment 4, which will be explained below, uses the time slot assigning method explained in embodiment 1. In Fig. 9, reference symbols 29a, 29b, and 29c denote groups of subscriber station each of which belongs to the base station, respectively, and reference symbols 27a, 27b, and 27c denote frames to which the time slot assigning method of a radio communications system according to embodiment 4 is applied.

Reference symbol 8a denotes an acquisition time period for the frame 27a, reference symbol 9a denotes an assignment calculation time period for the frame 27a, reference symbol 10a denotes a notification time period for the frame 27a, reference symbol 11a denotes a notification indicating the number of time slots requested for transmission by the group 29a for the frame 27a, reference symbol 12a denotes a notification indicating the number of time slots assigned to the group 29a for the frame 27a, and reference symbol 21a denotes a communication time period for the frame 27a.

Reference symbol 8b denotes an acquisition time period for the frame 27b, reference symbol 9b denotes an assignment calculation time period for the frame 27b, reference symbol 10b denotes a notification time period for the frame 27b, reference symbol 11b denotes a notification indicating the number of time slots requested for transmission by the group 29b for the frame 27b, reference symbol 12b denotes a notification indicating the number of time slots assigned to the group 29b for the frame 27b, and reference symbol 21b denotes a communication time period for the frame 27b.

Reference symbol 8c denotes an acquisition time period for the frame 27c, reference symbol 9c denotes an assignment calculation time period for the frame 27c, reference symbol 10c denotes a notification time period for the frame 27c, reference symbol 11c denotes a notification indicating the number of time slots requested for transmission by the group 29c for the frame 27c, reference symbol 12c denotes a notification indicating the number of time slots assigned to the group 29c for the frame 27c, and reference symbol 21c denotes a communication time period for the frame 27c.

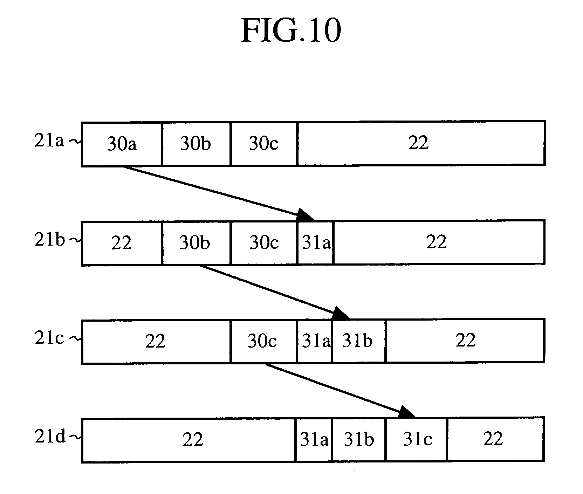

Fig. 10 is a diagram showing positions where time slots are assigned by using the time slot assigning method of the radio communications system according to embodiment 4 of the present invention. In Fig. 10, reference symbols 21a, 21b, 21c, and 21d denote communication time periods in the frames 27a, 27b, 27c, and 27d, and reference numeral 22 denotes a position where a time slot for the base station 6 is assigned. Reference symbols 30a, 30b, and 30c denote positions where time slots for the subscriber station groups 29a, 29b, and 29c are assigned, respectively, before assigning calculation is performed, and reference symbols 31a, 31b, and 31c denote positions where time slots for the subscriber station groups 29a, 29b, and 29c are assigned, respectively, after the assigning calculation is completed.

Next, the operation of the communications system in accordance with embodiment 4 of the present invention will be explained.

A case where the subscriber stations are divided into three groups will be explained, as this embodiment 4, with reference to Fig. 10. Since the subscriber stations are divided into the three groups, the radio communications system repeatedly performs assigning processing on three frames 27a, 27b, and 27c.

For the frame 27a, the base station acquires the notification 11a indicating the number of time slots requested for transmission by the subscriber station group 29a during the acquisition time period 8a, performs assigning calculation according to the flow chart of Fig. 4 during the assignment calculation time period 9a, and sends the notification 12a indicating the number of time slots assigned to the subscriber station group 29a to the subscriber station group 29a during the notification time period 10a, like that shown in Fig. 3.

For the frame 27b, the base station similarly acquires the notification 11b indicating the number of time slots requested for transmission by the subscriber station group 29b during the acquisition time period 8b, performs assigning calculation according to the flow chart of Fig. 4 during the assignment calculation time period 9b, and sends the notification 12b indicating the number of time slots assigned to the subscriber station group 29b to the subscriber station group 29b during the notification time period 10b, like that shown in Fig. 3.

For the frame 27c, the base station similarly acquires the notification 11c indicating the number of time slots requested for transmission by the subscriber station group 29c during the acquisition time period 8c, performs assigning calculation according to the flow chart of Fig. 4 during the assignment calculation time period 9c, and sends the notification 12c indicating the number of time slots assigned to the subscriber station group 29c to the subscriber station group 29c during the notification time period 10c, like that shown in Fig. 3.

When the sum of the total numbers of time slots, which are respectively requested for transmission by using the notifications 11a, 11b, and 11c respectively indicating the numbers of time slots requested for transmission by the several groups, exceeds the number of time slots used for communications, the ratio of the sum of the total numbers of time slots respectively requested for transmission by the several groups to the number of time slots used for communications is calculated and time slot assigning is performed using the ratio according to the flow chart of Fig. 4 during each of the assignment calculation time periods 9a, 9b, and 9c.

During the assignment calculation time period 9c, the ratio is computed using the following equation (5), the sum total (i.e., ΣM1c) of the numbers of time slots assigned to the subscriber station group 29c is computed using the following equations (6), and the total number (i.e., ΣM2) of time slots assigned to the base station is computed using the following equations (7).

$$\beta = NT/(\Sigma N1a + \Sigma N1b + \Sigma N1c + \Sigma N2) \quad (5)$$

$$\Sigma M1c = \beta \times \Sigma N1c \quad (6)$$

$$\Sigma M2 = NT - \Sigma M1a - \Sigma M1b - \Sigma M1c \quad (7)$$

The variables included in the equations (5) to (7) represent the following numbers.
β: the ratio
NT: the number of time slots used for communications in each frame
ΣN1a: the total number of time slots requested for transmission during the acquisition time period 8a (by the subscriber station group 29a)
ΣN1b: the total number of time slots requested for transmission during the acquisition time period 8b (by the subscriber station group 29b)
ΣN1c: the total number of time slots requested for transmission during the acquisition time period 8c (by the subscriber station group 29c)
ΣN2: the total number of time slots requested for transmission by the base station
ΣM2: the total number of time slots assigned to the base station
ΣM1a: the total number of time slots assigned to the subscriber station group 29a
ΣM1b: the total number of time slots assigned to the subscriber station group 29b
ΣM1c: the total number of time slots assigned to the subscriber station group 29c

The number of time slots assigned to each subscriber station included in the subscriber station group 29c is computed using equation (4).

The time slot assigning method according to embodiment 4 will be explained using the example of Fig. 10. Time slots for the subscriber station group 29a are assigned to the time slot position 30a during the communication time period 21a. This is done for eliminating the necessity for changing the time slot position where time slots assigned to the subscriber station group 29b are placed and which is adjacent to the time slot position 30a even if the assignment calculation performed during the assignment calculation time period 9a in the frame 27a using equations (2) to (6) according to the flow chart of Fig. 4 results in an increase or decrease in the number of time slots assigned to the subscriber station group 29a during the communication time period 21b. The time slot position 30a assigned to the subscriber station group 29a during the communication time period 21a is occupied by time slots 22 used for communications by the base station during the communication time period 21b.

Although time slots for the subscriber station group 29b are assigned to the time slot position 30b during the communication time period 21b, they are moved to the new time slot position 31b during the communication time period 21c according to assigning calculation performed during the assignment calculation time period 9b in the frame 27b, which is similar to that performed during the assignment calculation time period 9a, and the time slots assigned to the subscriber station group 29b during the communication time period 21b are replaced by time slots used for communications 22 of the base station during the communication time period 21c.

Although time slots for the subscriber station group 29c are assigned to the time slot position 30c during the communication time period 21c, they are moved to the new time slot position 31c during the communication time period 21d according to assigning calculation performed during the assignment calculation time period 9c in the frame 27c, which is similar to that performed during the assignment calculation time period 9a, and the time slots 30c assigned to the subscriber station group 29c during the communication time period 21c are replaced by time slots used for communications 22 of the base station during the communication time period 21d.

As shown in Fig. 10, according to the time slot assigning method of the embodiment 4, when the time slots assigned to a specific group are updated after the assigning calculation is completed, they are moved from the original position to a different position, and the original position is all assigned to the base station. This is because while there is a necessity to maintain several time slots assigned to the specific group, there is no necessity to change the time slots assigned to any other group even if the number of time slots assigned to the specific group increases or decreases after the assigning calculation according to this time slot assigning method is completed. Furthermore, according to the time slot assigning method of this embodiment, no idle time slots are provided between adjacent time slots assigned to two different groups.

This embodiment 4 is explained by taking, as an example, the case where there are three subscriber stations and the acquisition time period is spread out over three frames. This embodiment 4 can be also applied to a case where there are n subscriber stations and the acquisition time period is spread out over n frames (n is an integer equal to or larger than 4).

According to the communication procedure of this embodiment 4, the plural subscriber stations are divided into a plurality of groups, and the acquisition, assigning calculation, and notification processing is performed on a group-by-group basis. As a result, since the acquisition time period is spread out over some frames, as in the case of embodiment 3, the number of time slots used for acquisition of requests for transmission can be reduced. Since the acquisition processing is repeated for the three frames in the example of Fig. 9, the number of time slots used for acquisition of requests for transmission in which the number of time slots requested for transmission is transmitted during one acquisition time period can be reduced to one-third that in the case where the four time periods: the acquisition, communication, assigning calculation, and notification time periods are provided in each frame.

According to embodiment 3, the number of time slots requested for transmission by each subscriber station is acquired over multiple frames, and the assigning calculation and notification processing is performed at a time based on the acquired numbers of time slots requested for transmission by the plural subscriber stations. In contrast, according to embodiment 4, since the acquisition, assigning calculation, and notification processing is performed on a group-by-group basis, the number of computations required to assign time slots to subscriber stations included in each group can be reduced as compared with that in either of embodiments 2 and 3.

As mentioned above, the time slot assigning method used by the radio communications system according to this embodiment 4 includes the process (step ST16) of calculating the ratio (equation (1)) of the number of time slots used for communications to the sum total of the numbers of time slots requested for transmission when the sum of the sum total 1 of the numbers of time slots respectively requested for transmission by the subscriber stations and the sum total 2 of the number of time slots requested for transmission by the base station exceeds the number 3 of time slots used for communications via the radio channel, the process (step ST17) of determining the sum total of the numbers of time slots respectively assigned to the subscriber stations and the sum total of the number of time slots assigned to the base station from the product (equation (2)) of the sum total of the numbers of time slots respectively requested for transmission by the subscriber stations and the ratio and the product (equation (3)) of the sum total of the number of time slots requested for transmission by the base station and the ratio, and the process (step ST18) of determining the number of time slots assigned to each subscriber station from the product (equation (4)) of the number of time slots requested for transmission by each subscriber station and the ratio. All subscriber stations which belong to the base station 6 are divided into a plurality of groups 29a, 29b, and 29c, and the numbers 11a, 11b, and 11c of time slots respectively requested for transmission of the base station by the plural subscriber stations are periodically acquired on a group-by-group basis.

As can be seen from the above description, in accordance with this embodiment 4, since the plural subscriber stations are divided into the plurality of groups and the acquisition, assigning calculation, and notification processing is performed on a group-by-group basis, the acquisition time period is spread out over some frames, as in the case of embodiment 3. Therefore, the present embodiment offers an advantage of reducing the number of time slots used for acquisition of requests for transmission. In addition, since the acquisition, assigning calculation, and notification processing is performed on a group-by-group basis, the present embodiment offers another advantage of being able to reduce the number of computations required to assign time slots to subscriber stations included in each group as compared with that in either of embodiments 2 and 3.

Industrial Applicability

As mentioned above, the time slot assigning method used by the radio communications system according to the present invention is suitable for radio communications systems and so on which demand an equitable assignment of time slots used for communications to a plurality of subscriber stations.

## Claims

1. A time slot assigning method for use with a radio communications system, said method comprising:

   a step of calculating a ratio of a number of time slots used for communications via a radio channel to a sum of a total number of time slots requested for transmission by a base station and a sum total of numbers of time slots respectively requested for transmission by subscriber stations when the sum of the total numbers of time slots requested for transmission exceeds the number of time slots used for communications; a step of determining a total number of time slots assigned to said base station and a sum total of numbers of time slots respectively assigned to the subscriber stations from said total numbers of time slots requested for transmission and said ratio; and a step of determining a number of time slots assigned to each of the subscriber stations from a product of the number of time slots requested for transmission by each of the subscriber station and said ratio.

2. The time slot assigning method according to claim 1, wherein the number of time slots requested for transmission of said base station by each of the subscriber stations is acquired on a frame-by-frame basis.

3. The time slot assigning method according to claim 1 or 2, wherein the numbers of time slots respectively requested for transmission by the subscriber stations are acquired over multiple frames, and the number of time slots assigned to each of the subscriber stations and the number of time slots assigned to said base station are determined for multiple frames at a time.

4. The time slot assigning method according to anyone of the preceding claims, wherein the subscriber stations belonging to said base station are divided into a plurality of groups, and the number of time slots requested for transmission of said base station by each of the subscriber stations is periodically acquired on a group-by-group basis.

# FIG.1

# FIG.2

# FIG.3

FIG.4

START
↓
ACQUISITION OF THE NUMBER OF TIME SLOTS REQUESTED FOR TRANSMISSION BY THE BASE STATION ~ST13
↓
ACQUISITION OF THE NUMBER OF TIME SLOTS REQUESTED FOR TRANSMISSION BY EACH SUBSCRIBER STATION ~ST14
↓

ST15

THE NUMBER OF TIME SLOTS USED FOR COMMUNICATIONS≧ THE SUM TOTAL OF THE NUMBERS OF TIME SLOTS REQUESTED FOR TRANSMISSION

NO → ST16

CALCULATION OF THE RATIO

YES →

ST17

THE TOTAL NUMBER OF TIME SLOTS ASSIGNED TO THE BASE STATION = THE RATIO×THE TOTAL NUMBER OF TIME SLOTS REQUESTED FOR TRANSMISSION BY THE BASE STATION
THE SUM TOTAL OF THE NUMBERS OF TIME SLOTS ASSIGNED TO SUBSCRIBER STATIONS = THE RATIO ×THE SUM TOTAL OF THE NUMBERS OF TIME SLOTS RESPECTIVELY REQUESTED FOR TRANSMISSION BY THE SUBSCRIBER STATIONS

ST19

THE NUMBER OF TIME SLOTS ASSIGNED TO EACH SUBSCRIBER STATION= THE RATIO×THE NUMBER OF TIME SLOTS REQUESTED FORTRANSMISSION BY EACH SUBSCRIBER STATION ~ST18

THE NUMBER OF TIME SLOTS ASSIGNED TO EACH SUBSCRIBER STATION = THE NUMBER OF TIME SLOTS REQUESTED FOR TRANSMISSION BY EACH SUBSCRIBER STATION

↓
NOTIFICATION OF THE DETERMINED NUMBER OF ASSIGNED TIME SLOTS TO EACH SUBSCRIBER STATION ~ST20
↓
END

EP 1 536 657 A1

FIG.5

FIG.6

EP 1 536 657 A1

# FIG.7

DECREASE IN THE NUMBER OF TIME SLOTS REQUESTED FOR TRANSMISSION BY #a

INCREASE IN THE NUMBER OF TIME SLOTS REQUESTED FOR TRANSMISSION BY #a

INCREASE IN THE NUMBER OF TIME SLOTS REQUESTED FOR TRANSMISSION BY #b

6

27a  27b  27c  27d  27e  27f

BASE STATION

7-1～ SUBSCRIBER STATION #1

7-2～ SUBSCRIBER STATION #2

7-n～ SUBSCRIBER STATION #3

EP 1 536 657 A1

# FIG.8

EP 1 536 657 A1

# FIG.9

EP 1 536 657 A1

# FIG.10

| 21a ~ | 30a | 30b | 30c | 22 |

| 21b ~ | 22 | 30b | 30c | 31a | 22 |

| 21c ~ | 22 | 30c | 31a | 31b | 22 |

| 21d ~ | 22 | 31a | 31b | 31c | 22 |

# FIG.11

BASE STATION **6**

SUBSCRIBER STATION **7**

BASE STATION TIME SLOT ASSIGNING UNIT **54**

UPLINK CHANNEL TIME SLOT ASSIGNING MEANS **55**

DOWNLINK CHANNEL TIME SLOT ASSIGNING MEANS **56**

CONTROL LINE

SUBSCRIBER STATION TIME SLOT ASSIGNING UNIT ~53-1

SUBSCRIBER STATION TIME SLOT ASSIGNING UNIT ~53-2

SUBSCRIBER STATION TIME SLOT ASSIGNING UNIT ~53-3

DOWNLINK TRANSMISSION BUFFER **19-1**

DOWNLINK TRANSMISSION BUFFER **19-2**

DOWNLINK TRANSMISSION BUFFER **19-3**

UPLINK TRANSMISSION BUFFER **50-1**

UPLINK TRANSMISSION BUFFER **50-2**

UPLINK TRANSMISSION BUFFER **50-3**

BASE STATION I/O UNIT **51**

SUBSCRIBER STATION I/O UNIT **52**

COMMUNICATION LINE

RADIO

EP 1 536 657 A1

23

# INTERNATIONAL SEARCH REPORT

| International application No. |
| --- |
| PCT/JP02/09125 |

A. CLASSIFICATION OF SUBJECT MATTER
Int.Cl⁷ H04Q7/36

According to International Patent Classification (IPC) or to both national classification and IPC

B. FIELDS SEARCHED

Minimum documentation searched (classification system followed by classification symbols)
Int.Cl⁷ H04Q7/36, H04J3/00

Documentation searched other than minimum documentation to the extent that such documents are included in the fields searched

| Jitsuyo Shinan Koho | 1922–1996 | Toroku Jitsuyo Shinan Koho | 1994–2002 |
| Kokai Jitsuyo Shinan Koho | 1971–2002 | Jitsuyo Shinan Toroku Koho | 1996–2002 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2000-188774 A (Kokusai Electric Co., Ltd.), 04 July, 2000 (04.07.00), Page 8, Par. No. [0047] to page 9, Par. No. [0051]; Fig. 14 (Family: none) | 1-4 |
| A | JP 2001-244908 A (Mitsubishi Electric Corp., et al.), 07 September, 2001 (07.09.01), Page 6, Par. Nos. [0033] to [0036]; page 8, Par. No. [0047] to page 9, Par. No. [0050] (Family: none) | 1-4 |
| A | JP 5-336061 A (Fujitsu Ltd.), 17 December, 1993 (17.12.93), Page 3, Par. No. [0016] to page 4, Par. No. [0020] (Family: none) | 1-4 |

☒ Further documents are listed in the continuation of Box C. ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 10 December, 2002 (10.12.02) | 24 December, 2002 (24.12.02) |

| Name and mailing address of the ISA/ Japanese Patent Office | Authorized officer |
| --- | --- |
| Facsimile No. | Telephone No. |

Form PCT/ISA/210 (second sheet) (July 1998)

**EP 1 536 657 A1**

## INTERNATIONAL SEARCH REPORT

| | International application No. |
|---|---|
| | PCT/JP02/09125 |

**C (Continuation). DOCUMENTS CONSIDERED TO BE RELEVANT**

| Category* | Citation of document, with indication, where appropriate, of the relevant passages | Relevant to claim No. |
|---|---|---|
| A | JP 2002-247638 A (NTT Docomo Inc.), 30 August, 2002 (30.08.02), Page 4, Par. No. [0021] (Family: none) | 1-4 |
| A | JP 7-297829 A (NEC Corp.), 10 November, 1995 (10.11.95), Page 5, Par. Nos. [0018] to [0022] (Family: none) | 1-4 |

Form PCT/ISA/210 (continuation of second sheet) (July 1998)